(19) **Europäisches Patentamt / European Patent Office / Office européen des brevets**

(11) **EP 2 104 059 B1**

(12) **EUROPEAN PATENT SPECIFICATION**

(45) Date of publication and mention
of the grant of the patent:
**12.01.2011 Bulletin 2011/02**

(51) Int Cl.:
***G06K 9/34*** *(2006.01)*      ***G06K 9/00*** *(2006.01)*

(21) Application number: **09155194.5**

(22) Date of filing: **16.03.2009**

(54) **Apparatus and method for processing image**

Vorrichtung und Verfahren zur Bildverarbeitung

Appareil et procédé de traitement d'image

(84) Designated Contracting States:
**DE FR GB**

(30) Priority: **14.03.2008 JP 2008066555**

(43) Date of publication of application:
**23.09.2009 Bulletin 2009/39**

(73) Proprietor: **NEC Corporation
Minato-ku
Tokyo 108-8001 (JP)**

(72) Inventor: **Hara, Masanori
Tokyo (JP)**

(74) Representative: **Betten & Resch
Patentanwälte
Theatinerstrasse 8
80333 München (DE)**

(56) References cited:
**GB-A- 2 281 799    US-A1- 2008 031 531**

• **ANGELO CHIANESE ET AL: "Improving Minutiae Detection in Fingerprints Using Multiresolution Contrast Enhancement" IMAGE ANALYSIS AND RECOGNITION LECTURE NOTES IN COMPUTER SCIENCE;;LNCS, SPRINGER, BERLIN, DE, vol. 4142, 1 January 2006 (2006-01-01), pages 274-285, XP019043787 ISBN: 978-3-540-44894-5**
• **GREENBERG S ET AL: "Fingerprint image enhancement using filtering techniques" PATTERN RECOGNITION, 2000. PROCEEDINGS. 15TH INTERNATIONAL CONFERENCE ON SEPTEMBER 3-7, 2000; [PROCEEDINGS OF THE INTERNATIONAL CONFERENCE ON PATTERN RECOGNITION. (ICPR)], LOS ALAMITOS, CA, USA,IEEE COMPUT. SOC, US, vol. 3, 3 September 2000 (2000-09-03), pages 322-325, XP010533293 ISBN: 978-0-7695-0750-7**

## Description

## Technical Field

The present invention relates to an image processing apparatus and an image processing method and especially to an apparatus and method for processing a streaked pattern image such as a fingerprint image and a palmprint image.

## Background Art

Since a fingerprint of a plurality of ridge lines in the form of a streaked pattern has features of being permanent over life and unique among all people, it has been used for criminal investigation from old times. Especially, matching using a latent print in a location of a crime is an effective criminal investigation method. In recent years, fingerprint matching systems using computers are introduced in many police agencies.

However, since many of images of the latent prints are poor in quality and have noises in them, it is difficult for fingerprint examiners to conduct determination and for examination to be automated. In the image of the latent print, there are an image of overlapped fingerprints in which ridge lines overlap between two fingerprints, and an image including blur in the streaked pattern. If one of the overlapped fingerprints is designated as an object of processing, the other can be considered as a background noise of the streaked pattern. Hereafter, the background noise of the streaked pattern form is called a streaked pattern noise. The blur of the streaked pattern is also equivalent to the streaked pattern noise.

The streaked pattern noise is common to the fingerprint (fingerprint of interest) as a processing object in a point of being the streaked pattern. Therefore, it was difficult to extract only the fingerprint of interest from the overlapped fingerprints, and to remove the blur of the streaked pattern without degrading the fingerprint of interest.

Image processing methods as related arts of the present invention will be described below.

In "Background Pattern Removal by Power Spectral Filtering" (Applied Optics, March 15, 1983), by M. Cannon, A. Lehar, and F. Preston is disclosed a technique of removing the background noise by applying the Fourier transform. This technique is effective when a periodic noise appears in a form of a straight line in one direction, but it would have only a limited affect to the streaked pattern noise. For example, in a region where a direction of the ridge line of the fingerprint of interest and a direction of the streaked pattern noise are approximate to each other, there is a possibility that not only the streaked pattern noise but also the ridge lines of the fingerprint of interest, may disappear. Moreover, there is a possibility that even the ridge lines of the fingerprint of interest in a noise-free region deteriorate.

In Japanese Patent Application Publication (JP-A-Heisei 7-121723A) is disclosed a method of finding a direction distribution of a streaked pattern. In this method, an operator specifies a region and a direction indication line in an image of the streaked pattern. Based on the direction indication line, the direction distribution of the streaked pattern in the region is found.

Moreover, there are proposed various methods, in each of which a direction and periodicity of the fingerprint ridge lines are extracted, and a filtering process that matches the direction and the periodicity is performed, so that the fingerprint ridge line is enhanced. For example, in "fingerprint Image Enhancement: Algorithm and Performance Evaluation" (IEEE Transactions on Pattern Analysis and Machine Intelligence, 1998) by Lin Hong, Yifei Wang, and Anil Jain, and Japanese Patent Application Publication (JP-P2002-99912A) are disclosed such methods. However, it is considered that such methods are not effective when due to influence of the streaked pattern noise, the direction and the periodicity of the ridge lines of the fingerprint of interest cannot be correctly extracted.

On the other hand, it is known that local image enhancing methods such a local contrast stretch method (Adaptive Contrast Stretch) and a local histogram equalization method (Adaptive Histogram Equalization) are effective to remove a local background noise. In the local image enhancing method, it is important to set a reference region for image enhancement properly.

Japanese Patent Application Publication (JP-P2007-226746A) discloses a method of tracing the ridge line of the fingerprint. In order to trace the ridge line, ridge line direction data indicating a ridge line direction in each pixel is used.

Japanese Patent Application Publication (JP-P2008-52602A) discloses an image enhancing method for enhancing the fingerprint ridge line on a background including a region where the density differs drastically. In this method, a density value of a pixel to be processed is calculated, based on a plurality of density histograms of a plurality of reference regions.

US 2008/0031531 A1 discloses a line noise eliminating apparatus, with which the picture quality of the area that has no line noise is not deteriorated, and a line noise having no periodicity is eliminated. The line noise eliminating apparatus includes an image binarizing device which generates a binary image by an input image, a line noise reliability calculating device which calculates an edge feature quantity for each of black-pixel consecutive areas in the rotated images, and calculates line noise reliability based on the edge feature quantities, a line noise area determining device which determines the line noise areas that correspond to each of the rotation angle candidates based on the line noise reliability, and a density converting device which generates a density-converted image by applying local image enhancement on an area that corresponds to the line noise area of the input image so as to generate a density-converted image.

The noise is eliminated using local histogram equalisation or local contrast stretch, the procedures are executed in reference areas, each area is set as a straight-form pixel group along the line noise direction.

## Summary

An object of the present invention is to provide an image processing apparatus which can remove a streaked pattern noise properly from a streaked pattern image, an image processing method therefor.

The present invention is defined in the independent claims. The dependent claims define advantageous embodiments thereof.

In an aspect, an image processing apparatus includes: a data storage section configured to store an image data of a streaked pattern image as a gray-scale image and a direction distribution data indicating a direction distribution of a streaked pattern noise in a first area of the streaked pattern image; and a first image enhancing section configured to execute a first image enhancing process in the first area. The direction distribution data relates a first position as a position of a first pixel in the first area and a first direction as a direction of the streaked pattern noise in the first position. The first image enhancing section determines a first reference area as a local area which contains the first pixel based on the first direction such that the first reference area is contained in the first area, and calculates a post-process density as a density after the first image enhancing process in the first pixel based on a first density histogram in the first reference area.

In another aspect, an image processing apparatus includes: a data storage section configured to store an image data of a streaked pattern image as a gray-scale image and a direction distribution data indicating a direction distribution of a streaked pattern noise in a first area of the streaked pattern image; and a first image enhancing section configured to execute a first image enhancing process in the first area. The first image enhancing section determines for each of pixels in the first area, a reference area as a local area containing the pixel based on a direction of the streaked pattern noise in a position of the pixel such that the reference area is contained in the first area, to determine a plurality of the reference areas which contains a first pixel in the first area. Each of a plurality of density histograms of the plurality of reference areas has a maximum density and a minimum density, and there are a plurality of maximum densities and a plurality of minimum densities for the first pixel. The first image enhancing section calculates a post-process density as a density after the first image enhancing process to the first pixel from a pre-process density as a density before the image process to the first pixel such that the post-process density is contained in a predetermined density range, through a linear transformation using a local maximum as the smallest one of the plurality of maximum densities and a local minimum as the largest one the plurality of minimum densities.

In still another aspect , an image processing apparatus includes: a data storage section configured to store an image data of a streaked pattern image as a gray-scale image and a direction distribution data indicating a direction distribution of a streaked pattern noise in a first area of the streaked pattern image; and a first image enhancing section configured to execute a first image enhancing process in the first area. The direction distribution data relates a first position as a position of a first pixel in the first area and a first direction as a direction of the streaked pattern noise in the first position. The first image enhancing section determines a first reference area as a local area containing the first pixel based on the first direction such that the first reference area is contained in the first area, and calculates a post-process density as a density of the first pixel after the first image enhancing process, based on a first density histogram in the first reference area.

Also, in an aspect, an image processing method is achieved by executing a first image enhancing process on a first area of a streaked pattern image as a gray-scale image. A streaked pattern noise exists in the first area. The executing is achieved by determining a first reference area as a local area containing a first pixel based on a first direction as a direction of the streaked pattern noise in a first position as a position of the first pixel in the first area such that the first reference area is contained in the first area; and by calculating a post-process density as a density after the first image enhancing process on the first pixel based on a first density histogram in the first reference area.

In another aspect, an image processing method is achieved by executing a first image enhancing process on a first area of a streaked pattern image as a gray-scale image. A streaked pattern noise exists in the first area. The executing is achieved by determining for each of pixels in the first area, a reference area as a local area containing the pixel based on a direction of the streaked pattern noise in a position of the pixel such that the reference area is contained in the first area, to determine a plurality of the reference areas which contains a first pixel in the first area; and calculating a post-process density as a density after the first image enhancing process to the first pixel. Each of a plurality of density histograms of the plurality of reference areas has a maximum density and a minimum density, and there are a plurality of maximum densities and a plurality of minimum densities for the first pixel. The calculating the post-process density is achieved by calculating the post-process density from a pre-process density as a density before the image process to the first pixel such that the post-process density is contained in a predetermined density range, through a linear transformation using a local maximum as the smallest one of the plurality of maximum densities and a local minimum as the largest one the plurality of minimum densities.

In still another aspect of the present invention, a computer-readable recording medium in which a computer-readable program is recorded to realize an image processing method described any of the above.

According to the present invention, the image processing apparatus for properly removing the streaked pattern noise from a streaked pattern image, the image processing method therefor, and a program therefor are provided.

**Brief Description of the Drawings**

The above and other objects, advantages and features of the present invention will be more apparent from the following description of certain exemplary embodiments taken in conjunction with the accompanying drawings, in which:

FIG. 1 is a block diagram showing a hardware configuration of an image processing apparatus according to a first exemplary embodiment of the present invention;
FIG. 2 is a functional block diagram of the image processing apparatus according to the first exemplary embodiment;
Fig. 3 is a flowchart of an image processing method according to the first exemplary embodiment;
FIGS. 4A and 4B show a fingerprint image including noise and a fingerprint image including blur noise;
FIG. 5 shows a representative line set to the fingerprint image of FIG. 4A;
FIG. 6 shows a noise region set to the fingerprint image of FIG. 4A;
FIG. 7 shows an example of coding of a direction;
FIG. 8A shows an estimation result of a direction distribution of noise expressed using line segments which is overlapped by the representative lines;
FIG. 8B shows an estimation result of the direction distribution of the noise which is overlapped by the fingerprint image of FIG. 4A;
FIG. 9 shows an estimation result of the direction distribution of the noise shown by using a gray-scale image;
FIG. 10 shows an outside-of-noise region after a normal image enhancing process;
FIG. 11 shows a noise region after a direction-using image enhancing process;
FIG. 12 shows a synthesis image obtained by synthesizing an outside-of-noise region image after the normal image enhancing process and the noise region image after the direction-using image enhancing process;
FIGS. 13A and 13B show synthesis images obtained by applying the image processing method according to the first exemplary embodiment and the second exemplary embodiment to the fingerprint image of FIG. 4B;
FIGS. 14A to 14C show the fingerprint images after and before a streaked pattern noise is artificially added in a form of concentric circles, and a synthesis image obtained by applying the image processing method according to the first exemplary embodiment to the fingerprint image of FIG. 14A;
FIG. 15A shows an estimation result of the direction distribution of a streaked pattern in a form of concentric circles expressed using a line segment being overlapped by the fingerprint image of FIG. 14A;
FIG. 15B shows a reference region determined by an image processing method according to a third exemplary embodiment of the present invention being overlapped by an estimation result of the direction distribution of a streaked pattern in a form of concentric circles;
FIG. 15C shows a synthesis image obtained by applying the image processing method according to the third exemplary embodiment to the fingerprint image of FIG. 14A; and
FIG. 16 shows a synthesis image obtained by applying an image processing method according to a fourth exemplary embodiment to the fingerprint image of FIG. 14A.

**Exemplary Embodiments**

Hereinafter, an image processing apparatus and an image processing method according to the present invention will be described below with reference to the attached drawings.

[First Exemplary Embodiment]

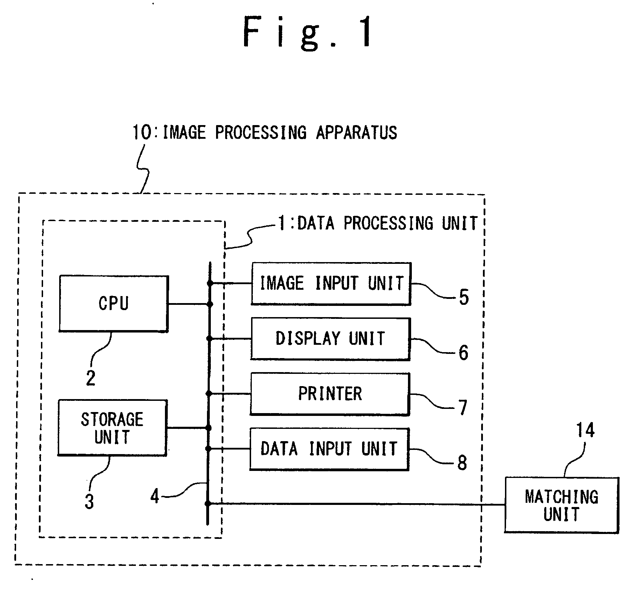

FIG. 1 shows a hardware configuration of an image processing apparatus 10 according to a first exemplary embodiment of the present invention. The image processing apparatus 10 has a data processing unit 1 such as a personal computer, an image input unit 5, a data input unit 8, and a display unit 6 as an output unit, and a printer 7. The image input unit 5 is a fingerprint sensor, a scanner, and a recording medium reading unit. The data input unit 8 is a pointing device such as a mouse, a tablet, and a keyboard and has a function of inputting data. The data processing unit 1 is provided with a bus 4, a CPU (Central Processing Unit) 2 connected to the bus 4, and a storage unit 3 connected to the bus 4. The storage unit 3 is a RAM (Random Access Memory) or a magnetic disk unit. The image input unit 5, the display unit 6, the printer 7, the data input unit 8, and a matching unit 14 are connected to the bus 4 via an interface (not shown). The matching unit 14 is an external unit.

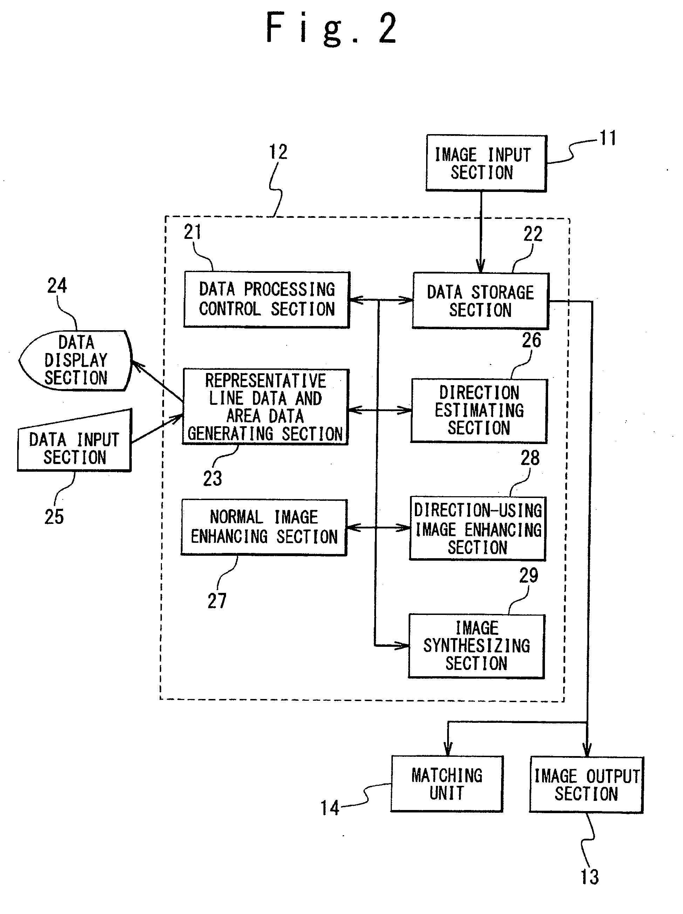

FIG. 2 is a functional block diagram of the image processing apparatus 10. An image input section 11, an image processing section 12, an image output section 13, a data display section 24, and a data input section 25 are realized by the CPU 2 executing a computer program and controlling hardware components of the image processing apparatus 10. The image processing section 12 has a data processing control section 21, a data storage section 22, a representative line data and area data generating section 23, a direction estimating section 26, a normal image enhancing section 27, a direction-using image enhancing section 28, and an image synthesizing section 29. The image input section 11 corresponds to the image input unit 5, and the image processing section 12 corresponds to the data processing unit 1. The data processing control section 21, the representative line data and area data generating section 23, the direction estimating section 26, the normal image enhancing section 27, the direction-using image, enhancing section 28, and the image synthesizing section 29 are realized by the CPU 2. The data storage section 22 corresponds to the storage unit 3, the data display section 24 corresponds to the display unit 6, and the data input section 25 corresponds to the data input unit 8. The image output section 13 corresponds to the display unit 6 or the sprinter 7.

The data processing control section 21 controls transfer/reception of data and messages performed among the data storage section 22, the representative line data and area data generating section 23, the direction estimating section 26, the normal image enhancing section 27, the direction-using image enhancing section 28, and the image synthesis section 29. The data storage section 22 provides a work area to the data processing control section 21, the representative line data and area data generating section 23, the direction estimating section 26, the normal image enhancing section 27, the direction-using image enhancing section 28, and the image synthesis section 29, and stores the data generated by them.

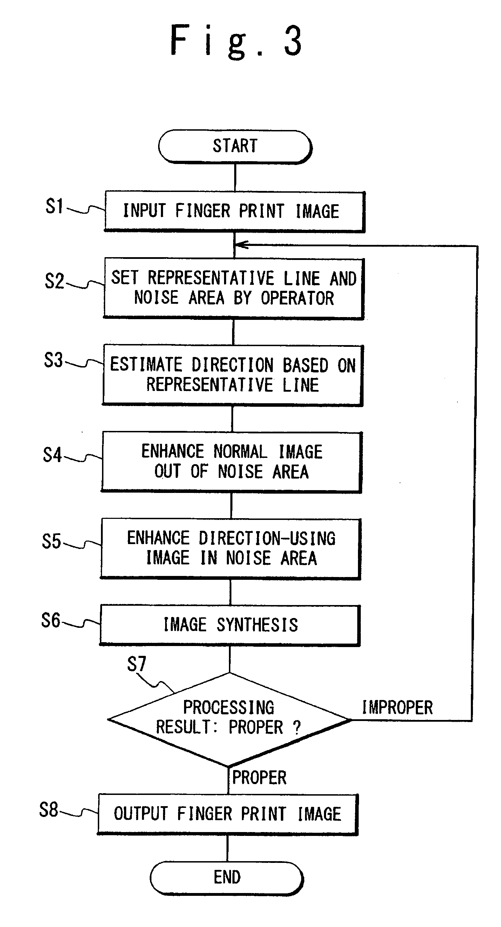

The image processing method according to the present exemplary embodiment will be described with reference to FIG. 3. The image processing method has Steps S1 to S8.

At Step S1, the image input section 11 supplies a data of a fingerprint image as a gray-scale image into the image processing section 12. The fingerprint image is a streaked pattern image, and the fingerprint image data is digital data. The image input section 11 generate a fingerprint image data by reading the fingerprint of a fingertip portion, generate the fingerprint image data by scanning a paper and the like, or reads the fingerprint image data from on a recording medium such as a magnetic disk and an optical disk. The data storage section 22 stores the fingerprint image data.

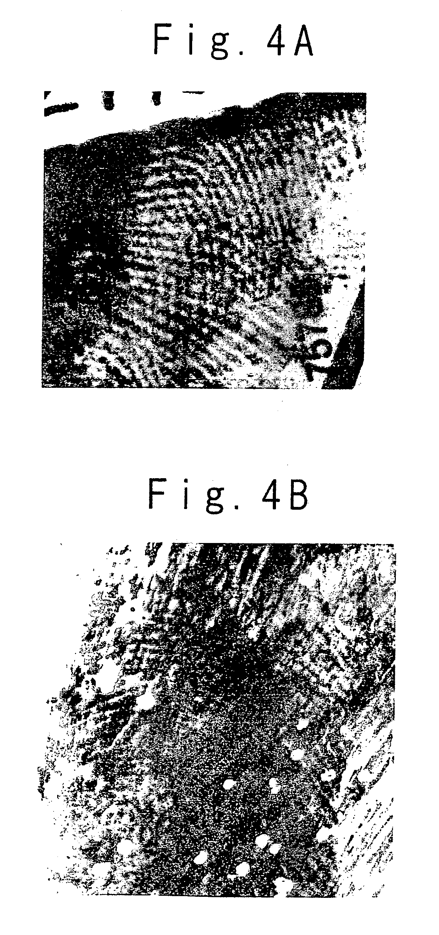

FIGS. 4A and 4B show examples of the fingerprint images. The fingerprint image of FIG. 4A is an overlapped image, which includes the fingerprint of interest and a streaked pattern noise as another fingerprint (hereinafter, to be referred to as noise fingerprint) that overlaps the fingerprint of interest. The fingerprint image of FIG. 4B includes the fingerprint of interest and the streaked pattern noise as blur noise. Such fingerprint images have been digitized with the resolution of 500 dpi in compliance with ANSI/NIST-ITL-1-2000 Data Format for the Interchange of Fingerprint, Facial, & Tattoo (SMT) Information that is standardized by U.S. National Institute of Standards and Technique. It should be noted that this standardization document is downloadable from following URL (Uniform Resource Locator) as of January 2008:

ftp://sequoyah.nist.gov/pub/nist_internal_reports/sp50 0-245-a16.pdf

According to the above-mentioned standard, pixels of the fingerprint, image have any one of density values of 256 gray scale levels from 0 to 255. In the brightness standard by the above-mentioned standard, it is indicated that as the density value becomes larger, the brightness is larger (brighter).

However, in the following description, it is indicated that as the density value becomes larger, the density is larger (darker). Therefore, a density value of a pixel of a ridge line section whose density is large (dark) is close to 255 that is a maximum value, while a density value of a pixel of paper ground or the valley section whose density is small (light) is close to 0 that is a minimum value. Here, a valley is a belt-like portion sandwiched by two adjacent ridge lines.

Next, a case that the image processing method is applied to the fingerprint image shown in FIG. 4A will be described below.

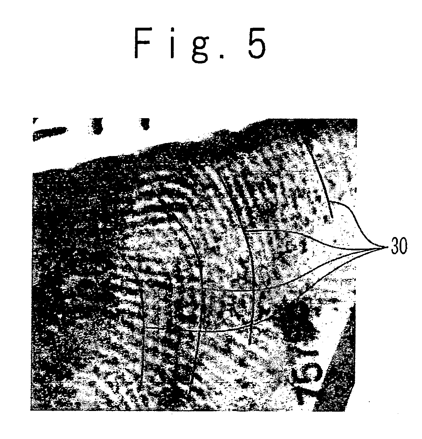

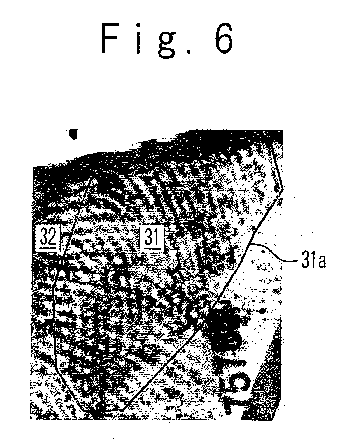

At Step S2, the representative line data and area data generating section 23 displays the fingerprint image on the data display section 24 based on the fingerprint image data stored in the data storage section 22. An operator looks at the displayed fingerprint image, and inputs representative lines 30 showing flows of the streaked pattern noise, as shown in FIG. 5. In addition, an operator inputs noise regions 31 in which the streaked pattern noise exists, as shown in FIG. 6. The operator draws the representative line 30 and a contour line 31a of the noise region 31 by operating the data input section 25.

The representative line 30 represents outline of the flow of the streaked pattern noise, and does not need to trace the streaked pattern noise accurately. Although the representative line 30 may be drawn by connecting a plurality of points specified by the operator by operating the data input section 25 with straight lines, it is desirable that the representative line 30 is drawn by curve approximation such as spline approximation based on the plurality of points. An accuracy of direction estimation that will be described later is improved by drawing the representative line 30 by curve approximation. Although there are four representative lines in FIG. 5, the number of representative lines is not restricted to four.

The contour line 31a is drawn based on a plurality of representative points representing a contour of the noise region 31 specified by the operator by operating the data input section 25. The contour line 31a may be drawn by a plurality of representative points being linked with straight lines, or may be drawn by curved line approximation based on the plurality of representative points. The noise region 31 is specified as a region inside the contour line 31a. Although the noise region 31 is a single closed region in FIG. 6, it may be a plurality of closed regions. An outside-of-noise region 32 is a region outside of the contour line 31a.

The representative line data and the area data generating section 23 generates representative line data indicating the representative lines 30 and area data indicating the noise region 31 based on an input operation of the data input section 25 by the operator.

Next, at Step S3, the direction estimating section 26 estimates a direction distribution of the streaked pattern noise. The direction estimating section 26 calculates a direction of the streaked pattern noise at a position of each pixel in the noise region 31 based on the representative line data and the area data, and generates direction distribution data indicating a direction distribution of The streaked pattern noise based on the calculation result. The data storage section 22 stores the direction distribution data.

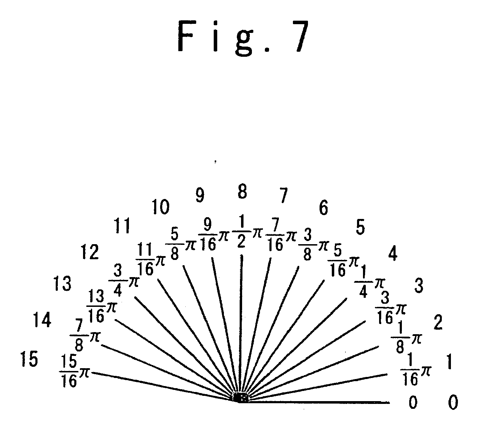

Here, a direction will be described. Mathematically, the direction is defined as inclination with an orientation. Since a flow of the streaked pattern noise has inclination but has no orientation, an expression "the direction of the streaked pattern noise" is not proper with respect to a mathematical definition. However, since there are many examples where inclination of the fingerprint ridge line is expressed as a ridge line direction or simply a direction, a term of direction is used here. Regarding coding of the direction, an example of the coding using eight directions for each $\pi/8$ and an example of the coding using 16 directions for each $\pi/16$ are a majority. Although a case where the coding is conducted in 16 directions takes a longer time than a case where the coding is conducted in eight directions, accuracy is improved. In the present exemplary embodiment, a case where the direction is coded into 16 directions of 0 to 15 will be described, as shown in FIG. 7.

Alternatively, the direction may be defined for each pixel, and the direction may be defined for each block that includes $4 \times 4$ pixels or $8 \times 8$ pixels. A smaller block size makes processing time longer, but improves accuracy. Here, a case where the direction is defined for every pixel will be described. However, when illustrating the direction distribution, a direction is shown by sampling every eight pixels both in a horizontal direction and in a perpendicular direction so as to be seen easily.

It is possible to use a method disclosed by Japanese Patent Application Publication (JP-A-Heisei 7-121723) for estimation of the direction distribution of the streaked pattern noise. For a pixel on the representative line 30, a direction of a tangent of the representative line 30 at a position of the pixel is estimated as the direction of the streaked pattern noise at that position. For a pixel not located on the representative line 30, pixels are searched from the pixel in eight directions radially, and the estimation is performed by using a direction of a pixel that is detected at first and for which a direction has already been estimated. The number of pixels that are detected first and for which directions have already been estimated is any one of 1 to 8.

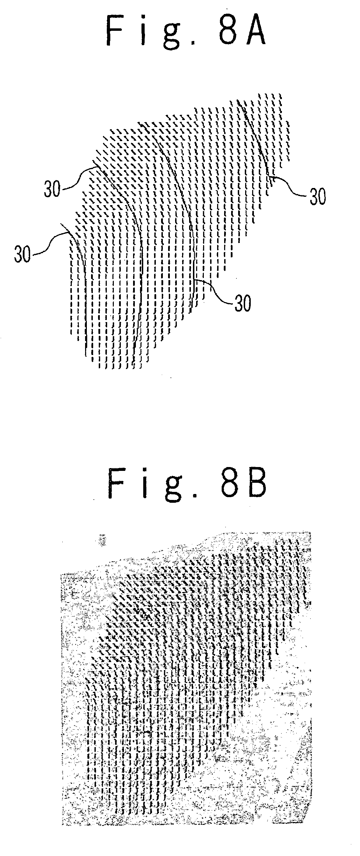

FIG. 8A shows an estimation result of the direction distribution of the streaked pattern noise that overlaps the representative line 30. FIG. 8B shows an estimation result of the direction distribution of the streaked pattern noise being overlapped by the fingerprint image (FIG. 4A) has an input image. In FIGS. 8A and 8B, the direction is expressed by the line segments. From FITS. 8A and 8B, it would b e understood that the direction distribution of the streaked pattern noise is estimated correctly.

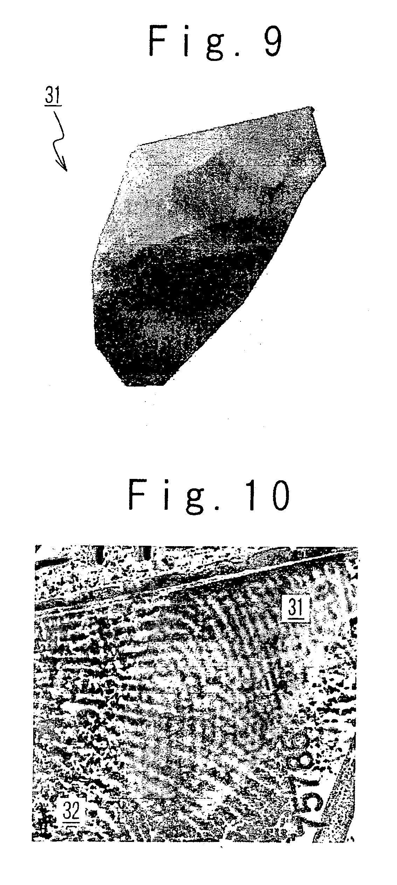

FIG. 9 shows an estimation result of the direction distribution of the streaked pattern noise in such a way that every pixel is given a density corresponding to a direction of a streaked pattern noise at a position of the pixel. A pixel whose direction at the position thereof is closer to a perpendicular direction is represented as a darker region.

Next at Step S4, the normal image enhancing section 27 performs an image enhancing process for enhancing the density in the outside-of-noise region 32 to generate the post-process data of the outside-of-noise region 32 that indicates the outside-of-noise region 32 after the image enhancing process. The normal image enhancing section 27 determines for each pixel of the outside-of-noise region 32 in the image enhancing process, a reference region that is a local region including the pixel so that it may be included in the outside-of-noise region 32, and calculates a density value of the pixels after the image enhancing process based on a density histogram of the reference region. The image enhancing process is based on either a local histogram equalizing method or a local contrast stretch method. Even when there is a region where a dynamic range of the fingerprint ridge line is narrow, in the outside-of-noise region 32 of the inputted image, the input image is converted into an image such that the whole region of the outside-of-noise region 32 has a uniform change of density by the image enhancing process. In such an image enhancing process, size setting of the reference region is important. Here, the reference region is set to a circle having a radius of 12 pixels. It is preferable that the size of the reference region is a minimum size that includes gray-scale change of the ridge lines. Since an average ridge line interval is about 10 pixels (actual distance is 0.5 mm), a circle having a diameter of 2.5 times of the average ridge line interval is suitable as the reference region.

FIG. 10 shows a result when the image enhancing process is executed on the outside-of-noise region 32. When FIG. 10 is compared with FIG. 6, it could be understood that a region with a strong background density and a region with a weak background density in the outside-of-noise region 32 are uniformly enhanced by the image enhancing process. It should be noted that in FIG. 10, the image enhancing process is not executed on the noise region 31.

Next, at Step S5, the direction-using image enhancing section 28 executes the image enhancing process for enhancing the density in the noise region 31 to generate the post-process noise region data that indicates the noise region 31 after the image processing. The direction-using image enhancing section 28 determines for each pixel of the noise region 31 in the image enhancing process, the reference region that is a local region, including the pixels so that it may be included in the noise region 31 based on the direction distribution data. The direction distribution data relates a position of each pixel in the noise region 31 to a direction of the streaked pattern noise at that position. The direction-using image enhancing section 28 determines for each pixel of the noise region 31, the reference region based on the direction cf the streaked pattern noise at the position of the pixel. The reference region is determined so as to be a belt-like region that extends along a curved line (a ridge line or valley) included in the streaked pattern noise. The direction-using image enhancing section 28 calculates a density value of the pixels after the image enhancing process based on the density histogram of the reference region. The image enhancing process is based on either the local histogram equalizing method or the local contrast stretch method.

At the image enhancing process of Step S5, the streaked pattern noise is removed properly and the ridge lines of the fingerprint of interest are enhanced simultaneously. Below, the reason will be described.

Referring to FIG. 4A, an investigation of a density change along the ridge line of the noise fingerprint reveals that the density of a portion that overlaps the ridge lines of the fingerprint, of interest is larger than the density of a portion that does not overlap the ridge lines of the fingerprint of interest. If the density change is enhanced along the ridge line of the noise fingerprint, the portion of the ridge line of the fingerprint of interest that overlaps the ridge line of the noise fingerprint will be enhanced. Also, if the density change is enhanced along the valley of the noise fingerprint, the portion of the valley of the fingerprint of interest that overlaps the ridge lines of the noise fingerprint will be enhanced. Therefore, by the image enhancing process using the reference region that is determined so as to extend along a curved line of the streaked pattern noise, the streaked pattern noise disappears and the fingerprint of interest is enhanced.

The determination of the reference region is carried out as follows. The direction-using image enhancing section 28 extracts a pixel group (a total of 24 pixels) over which passes when advancing to a first side along a direction of the streaked pattern noise and a second side opposite to it from a position of each pixel in the noise region 31 by twelve pixels, respectively. The reference region includes this pixel group. The number of these pixels (here 12) is selected based on the same reason as the case of the radius of the circular reference region at Step S4.

It is preferable that the width of the reference region at Step S5 is the width of one pixel. If this width is large, since both the ridge line and the valley of the noise fingerprint are included in the reference region, it will become difficult to remove the streaked pattern noise properly. However, even when the width of the reference region is larger than a width of two pixels, it is possible to attain the object of the present invention.

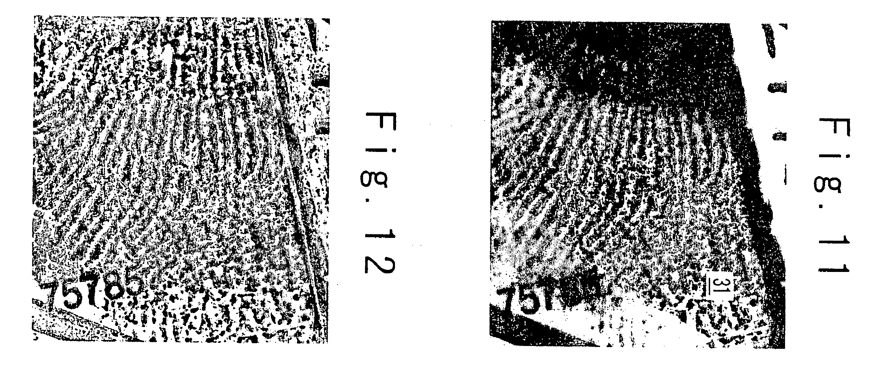

FIG. 11 shows a result of the image enhancing process in the noise region 31. Comparison of FIG. 11 and FIG. 6 reveals that the image enhancing process makes the ridge lines of the noise fingerprint almost disappear and enhances the ridge lines of the fingerprint of interest. It should be noted that in FIG. 11, the image enhancing process is not executed to the outside-of-noise region 32.

Next, at Step S6, the image synthesizing section 29 generates synthesis image data indicating a synthesis image based on the post-process data of the noise region and the post-process data of the outside-of-noise region. The synthesis image has the outside-of-noise region 32 having the density values after the image enhancing process at Step S4 and the noise region 31 having the density values after the image enhancing process at Step S5, and a smoothing process is executed in a boundary of the noise region 31 and the outside-of-noise region 32.

FIG. 12 shows a synthesis image. As is clear from the figure, the streaked pattern noise is removed properly and the ridge lines of the fingerprint of interest are enhanced.

By setting the image enhancing process at Step S4 and the image enhancing process at Step S5 to be an equivalent process, the intensity (dynamic range and the like.) of the density enhancement can be made equivalent between in the noise region 31 and in the outside-of-noise region 32, and a more natural synthesis image can be generated. For example, when the image enhancing process at Step S4 is based on the local histogram equalizing method, the image enhancing process at Step S5 shall also be based on the local histogram equalizing method. Alternatively, when the image enhancing process at Step S4 is based on the local contrast stretch method, the image enhancing process at Step S5 shall also be based on the local contrast stretch method. Further, it is more preferable that a maximum width of the reference region at Step S4 and a maximum width of the reference region at Step S5 are made to coincide with each other. More specifically, a diameter of the circular reference region at Step S4 and a length of the belt-like reference region at Step S5 shall be equalized.

Next, at Step S7, the representative line data and the area data generating section 23 display the synthesis image shown in FIG. 12 and an estimation result of the direction distribution of the streaked pattern noise shown in FIGS. 8A and 8B on the data display section 24, prompting the operator to determine whether the image processing is proper. When it is determined to be not proper, the process flow returns to Step S2 for addition and correction of the representative line 30 and the noise region 31. Steps S2 to S6 are repeated until the operator determines that it is proper. When the operator determines that it is proper, the process flow advances to proceed to Steep S8.

At Step S8, the data processing control section 21 outputs the synthesis image data to the image output section 13, the matching unit 14, or a minutia extracting unit (not shown). The image output section 13 displays or prints the synthesis image of FIG, 12 based on the synthesis image data. The matching unit 14 uses the synthesis image data for matching the fingerprints. The minutia extracting unit extracts a minutiae from the synthesis image.

According to the present exemplary embodiment, the streaked pattern, noise is removed from the image of the latent print and the ridge lines of the fingerprint of interest are enhanced. Therefore, determination by a fingerprint examiner becomes easy. Since extraction of the minutiae from the fingerprint of interest is performed properly, the accuracy of fingerprint matching using the minutiae is improved.

[Second Exemplary Embodiment]

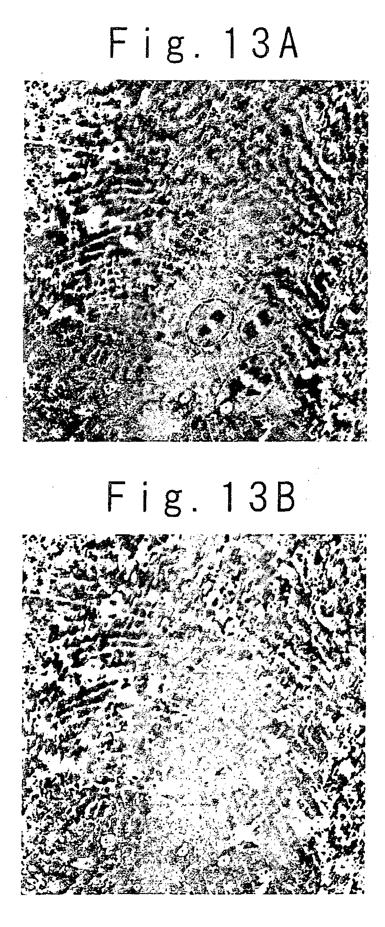

FIG. 13A shows a processing result when applying the image processing method according to the first exemplary embodiment to the fingerprint image shown in FIG. 4B. As shown in FIG. 13A, it could be understood that a blur noise is removed and the ridge lines of the fingerprint of interest are enhanced. However, paying attention to a region surrounded with a broken line frame of an ellipse form, there remain regions that are darkly displayed, and consequently it could be understood that noise removal is insufficient. This cause is in that due to noise in which a white portion exists in the vicinity of a black portion, it becomes impossible to enhance the ridge lines of the fingerprint of interest.

An image processing method according to a second exemplary embodiment of the present invention will be described below. The image processing method according to the second exemplary embodiment is suitable for image processing of the fingerprint image having such noise. The image processing method according to the second exemplary embodiment is executed by the image processing apparatus 10 and is the same as the image processing method according to the first exemplary embodiment except for Step S5.

At Step S5 according to the present exemplary embodiment, the direction-using image enhancing section 28 executes the image enhancing process for enhancing the density in the noise region 31 to generate the post-process noise region data that indicates the noise region 31 after the image processing. Like the case of the first exemplary embodiment, the direction-using image enhancing section 28 determines for each pixel of the noise region 31, the reference region as a local region including the pixel so that it may be included in the noise region 31 based on the direction distribution data. As a result, for each pixel in the noise region 31, there exist a plurality of reference regions that include that pixel. The direction-using image enhancing section 28 calculates a post-process density value as the density value of the pixel after the image enhancing process of Step S5 based c-n a plurality of density histograms of the plurality of reference regions. In detail, the direction-using image enhancing section 28 determines for each pixel of the noise region 31, a local region having the pixel at a center as the reference region. Paying attention to a certain pixel X in the noise region 31, the reference region includes the pixel X at the center, and there exists the reference region including the pixel X, among the reference regions determined as local regions having remaining pixels at the centers in the noise region 31. The direction-using image enhancing section 28 calculates the post-process density value of a first pixel based on all the reference regions including the pixel X.

It is possible to use a method disclosed by Japanese Patent Application Publication (JP-P2008-52602A) in order to calculate the post-process density value that is based on a plurality of density histograms of the plurality of reference regions. Since a maximum density value and a minimum density value exist in each of a plurality of density histograms of the plurality of reference regions, the plurality of maximum density values and the plurality of minimum density values exist for the pixels. By linear transformation using both a local maximum value that is a minimum among the plurality of maximum density values and a local minimum value that is a maximum among the plurality of minimum density values, the direction-using image enhancing section 28 calculates the post-process density value from a pre-process density value that is the density value before the image processing of the pixel at Step S5 so that the post-process density value that is the density value after the image enhancing process of the pixel at Step S5 may be included in a predetermined density range.

When the local maximum, value is expressed by Pmax, the local minimum value is expressed by Pmin, a minimum of a density range is expressed by Tmin, a maximum of the density range is expressed by Tmax, the pre-processing density value is expressed by Gb, and the post-process density value is expressed by Ga; the above-mentioned linear transform is given by the following equation (1):

$$Ga = \frac{(Gb - P\min)(T\max - T\min)}{P\max - P\min} + T\min \qquad (1)$$

For example, when the data format of the fingerprint image data is defined so that each pixel included in the fingerprint image may have any one of the density values of 256 gray scales of 0 to 255, the minimum of the density range is zero and the maximum of the density range is 255 for all the pixels in the noise region 31. For example, the direction-using image enhancing section 28 determines a first reference region as a local region including the first pixel so that it may be included in the noise region 31, based on the direction of the streaked pattern noise at a first position of the first pixel in the noise region 31, and determines a second reference region as a local region including the second pixel so that it may be included in the noise region awl, based on the direction of the streaked pattern noise at a second position of the second pixel in the noise region 31. Here, the second reference region includes the first pixel. The direction-using image enhancing section 28 calculates the first post-process density value from the first pre-process density value as the density, value of the first pixel before the image processing at Step S5 so that a first post-process density value as the density value of the first pixel after the image enhancing process at Step S5 may be included in the above-mentioned density range, by the above-mentioned linear transformation that uses a local maximum value that is a smaller one between the maximum density value in the first density histogram of the first reference region and the maximum, density value in the second density histogram of the second reference region; and a local minimum value as a larger one between a minimum density value in the first density histogram and a minimum density value in the second density histogram.

FIG. 13B shows a processing result when the image processing method according tc the present exemplary embodiment is applied to a fingerprint image shown in FIG. 4B. In FIG. 13B, also in a region corresponding to regions surrounded by a broken line frame of an ellipse form in FIG. 13A, a noise is removed properly and the ridge lines of the fingerprint of interest are enhanced.

[Third Exemplary Embodiment]

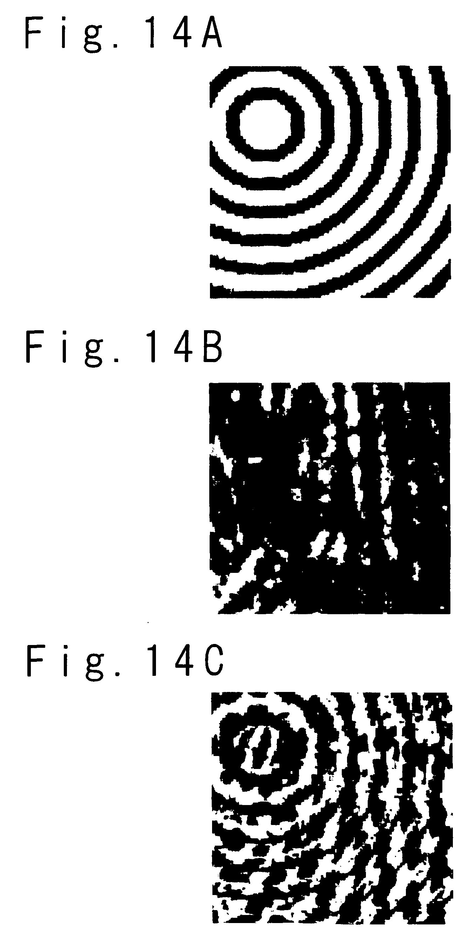

FIG. 14A shows a fingerprint image including a streaked pattern noise with a large curvature. The fingerprint image of FIG. 14A is a fingerprint image shown in FIG. 14B to which a streaked pattern noise in a form of concentric circles is added artificially. FIG. 14C shows a processing result when the image processing method according to the first exemplary embodiment is applied to the fingerprint image of FIG. 14A. As shown in FIG. 14C, one can notify that noise removal is insufficient in a region (an upper left region of the figure) where curvature of the streaked pattern noise is large.

An image processing method according to a third exemplary embodiment of the present invention will be described. The image processing method according to the third exemplary embodiment is suitable for image processing of the fingerprint image including the streaked pattern noise with a large curvature like this below.

The image processing method according to the third exemplary embodiment is performed by the image processing apparatus 10 and is the same as that by the image processing method according to the first exemplary embodiment except for Step S5.

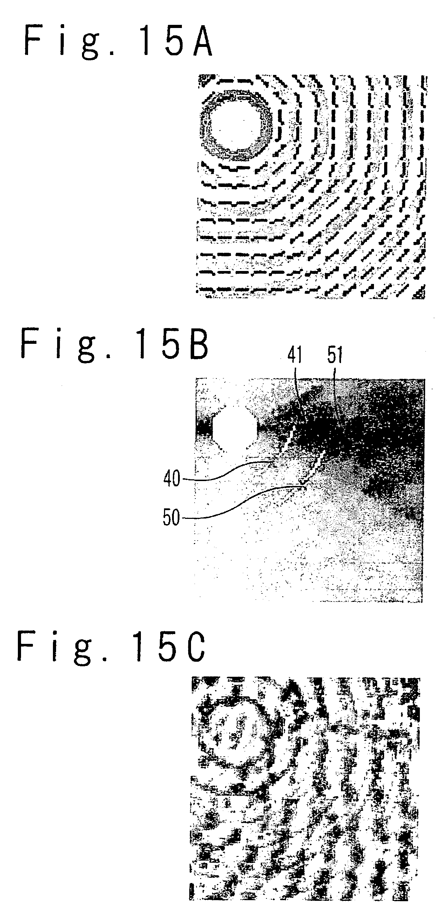

At Step S3 related to the present exemplary embodiment, the direction estimating section 26 estimates direction distribution of the streaked pattern noise included in the fingerprint image of FIG. 14A, and generates the direction distribution data indicating the direction distribution of the streaked pattern noise. FIG. 15A shows an estimation result of the direction distribution of the streaked pattern noise displayed being overlapped by the fingerprint image of FIG. 14A.

At Step S5 related to the present exemplary embodiment, the direction-using image enhancing section 28 executes the image enhancing process for enhancing the density in the noise region 31 to generate the post-process noise region data that indicates the noise region 31 after the image processing. The direction-using image enhancing section 23 determines for each pixel of the noise region 31, the reference region as a local region including the pixels so that it may be included in the noise region 31 based on the direction distribution data. The direction-using image enhancing section 28 determines for each pixel of the noise region 31, the reference region based on the direction of the streaked pattern noise at the position of the pixel. The reference region is determined so as to be a belt-like region in a form along a curved line included in the streaked pattern noise. The direction-using image enhancing section 28 calculates a density value of the pixel after the image enhancing process, based on the density histogram of the reference region.

It is possible to use a method disclosed in Japanese Patent Application Publication (JP-P2007-226746A) in order to determine the reference region having a form along the curved line included in the streaked pattern noise.

A method of determining the reference region will be described referring to FIG. 15B. In FIG. 15B, an estimation result of the direction distribution of the streaked pattern noise is shown by taking a density corresponding to the direction of the streaked pattern noise at the position of the pixel. The direction-using image enhancing section 28 determines a first pixel as a pixel whose density value after the image enhancing process (for example, a pixel of interest 40 or 50) is to be calculated as a pixel included in the reference region, and detects a second pixel as an $N^{th}$ pixel (N is a natural number) in the first direction from the first pixel, based on both of a first position as a position of the first pixel and a first direction as a direction of the streaked pattern noise at the first position. Based on the second position as a position of the second pixel and a second direction as a direction of the streaked pattern noise at the second position, the direction-using image enhancing section 28 detects a third pixel as an $N^{th}$ pixel from the second pixel on one side in the second direction and a fourth pixel as an $N^{th}$ pixel from the second pixel on the other side in the second direction. The direction-using image enhancing section 28 compares a distance between the third pixel and the first pixel as a pixel previous to the third pixel by two pixels and a distance between the first pixel and the fourth pixel, and determines a pixel, that is further from the first pixel, of the third and fourth pixels as a pixel included in the reference region. The direction-using image enhancing section 28 determines pixels existing between the first pixel and the further pixel as pixels included in the reference region. By repeating the above-mentioned process, the direction-using image enhancing section 28 determines a portion extending from the first pixel of the reference region on one side in the first direction, and similarly, determines a portion extending from the first pixel of the reference region on the other side in the first direction.

As a result of this, the reference region 41 is determined for the pixel of interest 40, and the reference region 51 is determined for the pixel of interest 50. Comparison of FIGS. 15A and 15B reveals that the reference region 41 and the reference region 51 have a form along the curved line included in the streaked pattern noise.

FIG. 15C shows a processing result when the image processing method according to the present: exemplary embodiment is applied to the fingerprint image shown in FIG. 14A. As is clear from a comparison of FIGS. 15C and 14C, according to the present exemplary embodiment, since the form of the reference region fits to the streaked pattern noise still better, noise removal in a region where the curvature of the streaked pattern noise is large (an upper left region of the figure) improves.

[Fourth Exemplary Embodiment]

An image processing method according to a fourth exemplary embodiment of the present invention is provided by a combination of the image processing method according to the second exemplary embodiment and the image processing method according to the third exemplary embodiment. In the image processing method according to the fourth exemplary embodiment, the density value is calculated based on a plurality of reference regions each having a curved form.

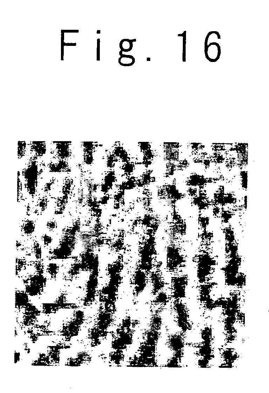

FIG. 16 shows a processing result when the image processing method according to the fourth exemplary embodiment is applied to the fingerprint image shown in FIG. 14A. As is clear from comparison of FIGS. 16 and 15C, according to the present exemplary embodiment, noise removal performance improves further.

As described above, the case where the object of the image processing was the fingerprint image has been described, but the objects of the image processing may be other streaked pattern images such as a palmprint image.

In conjunction with the above description, the following is described.

An image processing apparatus comprises a data storage section configured to store an image data of a streaked pattern image as a gray-scale image and a direction distribution data indicating a direction distribution of a streaked pattern noise in a first area of the streaked pattern image; and

a first image enhancing section configured to execute a first image enhancing process in the first area,

wherein the first, image enhancing section determines for each of pixels in the first area, a reference area as a local area containing the pixel based on a direction of the streaked pattern noise in a position of the pixel such that the reference area is contained in the first area, to determine a plurality of the reference areas which contains a first pixel in the first area,

each of a plurality of density histograms of the plurality of reference areas has a maximum density and a minimum density, and there are a plurality of maximum densities and a plurality of minimum densities for the first pixel, and

the first image enhancing section calculates a post-process density as a density after the first image enhancing process to the first pixel from a pre-process density as a density before the image process to the first pixel such that the post-process density is contained in a predetermined density range, through a linear transformation using a local maximum as the smallest one of the plurality of maximum densities and a local minimum as the largest one the plurality of minimum densities.

An image processing apparatus comprises a data storage section configured to store an image data of a streaked pattern image as a gray-scale image and a direction distribution data indicating a direction distribution of a streaked pattern noise in a first area of the streaked pattern image; and

a first image enhancing section configured to execute a first image enhancing process in the first area,

wherein the direction distribution data relates a first position as a position of a first pixel in the first area and a first direction as a direction of the streaked pattern noise in the first position,
the first image enhancing section determines a first reference area as a local area containing the first pixel based on the first direction such that the first reference area is contained in the first area, and calculates a post-process density as a density of the first pixel after the first image enhancing process, based on a first density histogram in the first reference area.

**Claims**

1. An image processing apparatus (10) comprising:

   a data storage section (22) configured to store an image data of a streaked pattern image as a gray-scale image and a direction distribution data indicating a direction distribution of a streaked pattern noise in a first area of the streaked pattern image; and
   a first image enhancing section (28) configured to execute a first image enhancing process in the first area, wherein the direction distribution data relates a first position as a position of a first pixel in the first area and a first direction as a direction of the streaked pattern noise in the first position,
   said first image enhancing section (28) determines a first reference area as a local area which contains the first pixel based on the first direction such that the first reference area is contained in the first area, and calculates a post-process density as a density after the first image enhancing process in the first pixel based on a first density histogram in the first reference area,
   wherein said first image enhancing section (28) determines the first reference area to have a shape curved along a curved line contained in the streaked pattern noise.

2. The image processing apparatus 10 according to claim 1, further comprising:

   a data generating section (23); and
   a direction estimating section (26),
   wherein said data generating section (23) generates a first area data indicating the first area and a representative line data indicating representative lines of the streaked pattern noise in response to an input operation, and said direction estimating section (26) executes calculation to a direction of the streaked pattern noise in a position of each pixel within the first area based on the first area data and the representative line data and generates the direction distribution data of based on the calculation result.

3. The image processing apparatus (10) according to claim 1 or 2, wherein said first image enhancing section (28) determines a second reference area as a local area containing a second pixel based on a second direction as a direction of the streaked pattern noise in a second position as a position of the second pixel within the first area such that the second reference area is contained in the first area,
   the first pixel is contained in the second reference area, and
   said first image enhancing section (28) calculates the post-process density from a pre-process density as a density before the image process in the first pixel such that the post-process density is contained in a predetermined density range, through a linear transformation using a local maximum as the smallest one of a maximum density in the first density histogram and a maximum density of the second density histogram in the second reference area and a local minimum as the largest one of a minimum density in the first density histogram and a minimum density in the second density histogram.

4. The image processing apparatus (10) according to claim 3, wherein the local maximum is Pmax, the local minimum is Pmin, a minimum of the density range is Tmin, a maximum of the density range is Tmax, the pre-process density is Gb, and the post-process density is
   Ga, and said first image enhancing section (28) calculates the post-process density based on the following equation:

$$Ga = (Gb-Pmin)(Tmax-Tmin)/(Pmax-Pmin) + Tmin$$

5. The image processing apparatus (10) according to any of the preceding claims, wherein said first image enhancing section (28) detects a third pixel contained in the first area based on the first position and the first direction, detects a fourth pixel contained in the first area based on a third position as a position of the third pixel and a third direction as a direction of the streaked pattern noise in the third pixel, and determines the first reference area such that the fourth pixel is contained the first reference area.

6. The image processing apparatus (10) according to claim 1 or 2, further comprising:

a second image enhancing section (27) configured to execute a second image enhancing process in a second area as an area other than the first area of the streaked pattern image, wherein said second image enhancing section (27) determines a second reference area as a local area which contains the second pixel within the second area such that the second reference area is contained in the second area, calculates a density after the second image enhancing process in the second pixel based on a second density histogram in the second reference area, and the first reference area and the second reference area are determined such that maximum ranges are same, based on one of a local histogram equalizing method and a contrast stretch method in the first image enhancing process and the second image enhancing process, respectively.

7. An image processing method comprising:

executing a first image enhancing pocess (54) on a first area of a streaked pattern image as a gray-scale image, wherein a streaked pattern noise exists in the first area, said executing (54) comprises:

determining a first reference area as a local area containing a first pixel based on a first direction as a direction of the streaked pattern noise in a first position as a position of the first pixel in the first area such that the first reference area is contained in the first area; and calculating a post-process density as a density after the first image enhancing process on the first pixel based on a first density histogram in the first reference area,

wherein said determining the first reference area comprises:

determining the first reference area to have a shape curved along a curved line contained in the streaked pattern noise.

8. The image processing method according to claim 7, further comprising:

generating a direction distribution data indicating a direction distribution of the streaked pattern noise,

wherein the direction distribution data relates the first position and the first direction, said generating comprises:

generating a first area data indicating the first area and a representative line data indicating representative lines of the streaked pattern noise based on an input operation; and calculating the direction of the streaked pattern noise on a position of each pixel in the first area based on the first area data and the representative line data.

9. The image processing method according to claim 7 or 8, wherein said executing a first image enhancing process (54) comprises:
determines a second reference area as a local area containing a second pixel based on a second direction as the direction of the streaked pattern noise on a second position as a position of the second pixel in the first area such that the second reference area is contained in the first area, and the first pixel is contained in the second reference area, said calculating the post-process density comprises:

calculating the post-process density from a pre-process density as a density before the image process in the first pixel, such that the post-process density is contained in a predetermined density range, through a linear transformation using a local maximum as the smallest one of a maximum density in a first density histogram and a maximum density in a second density histogram in the second reference area, and a local minimum of the largest one of a minimum density in the first density histogram and a minimum density in the second density histogram.

**10.** The image processing method according to claim 9, wherein the local maximum is Pmax, the local minimum is Pmin, a minimum of the density range is Tmin, a maximum of the density range is Tmax, the pre-process density is Gb, and the post-process density is Ga, and
said calculating the post-process density comprises:

calculating the post-process density based on the following equation:

$$Ga = (Gb-Pmin)(Tmax-Tmin)/(Pmax-Pmin) + Tmin$$

**11.** The image processing method according to any of the preceding claims, wherein said determining the first reference area comprises:
detecting a third pixel contained in the first area based on the first position and the first direction;
detecting a fourth pixel contained in the first area based on a third position as a position of the third pixel and a third direction as a direction of the streaked pattern noise in the third pixel; and
determining the first reference area such that the fourth pixel is contained the first reference area.

**12.** The image processing method according to claim 7 or 8, further comprising:

executing a second image enhancing process (55) on a second area as an area other than the first area of the streaked pattern image,
wherein said executing the second image enhancing process (55) comprises:

determining a second reference area as a local area containing a second pixel in the second area such that the second reference area is contained in the second area; and
calculating a density after the second image enhancing process on the second pixel based on a second density histogram in the second reference area,
and
the first reference area and the second reference area are determined to be coincident with each other in maximum range, based on one of a local histogram equalizing method and a local contrast stretch method in the first image enhancing process and the second image enhancing process.

**13.** A computer-readable recording medium in which a computer-readable program is recorded to realize an image processing method according to any of claims 7 to 12.

**Patentansprüche**

**1.** Bildverarbeitungsvorrichtung (10), umfassend:

einen Datenspeicherabschnitt (22), der dazu konfiguriert ist, Bilddaten eines Streifenmusterbildes als Graustufenbild sowie Richtungsverteilungsdaten zu speichern, die eine Richtungsverteilung eines Streifenmusterrauschens in einem ersten Bereich des Streifenmusterbildes angeben; und
einen ersten Bildverbesserungsabschnitt (28), der dazu konfiguriert ist, einen ersten Bildverbesserungsprozeß in dem ersten Bereich auszuführen,
wobei sich die Richtungsverteilungsdaten auf eine erste Position als eine Position eines ersten Pixels im ersten Bereich und eine erste Richtung als eine Richtung des Streifenmusterrauschens an der ersten Position beziehen,
der erste Bildverbesserungsabschnitt (28) basierend auf der ersten Richtung einen ersten Referenzbereich als lokalen Bereich, der das erste Pixel enthält, so bestimmt, dass der erste Referenzbereich im ersten Bereich enthalten ist, und eine Nachbearbeitungsdichte als eine Dichte nach dem ersten Bildverbesserungsprozeß im ersten Pixel basierend auf einem ersten Dichtehistogramm im ersten Referenzbereich berechnet,
wobei der erste Bildverbesserungsabschnitt (28) bestimmt, dass der erste Referenzbereich eine Form aufweist, die entlang einer gekrümmten Linie gekrümmt ist, die in dem Streifenmusterrauschen enthalten ist.

**2.** Bildverarbeitungsvorrichtung (10) nach Anspruch 1, ferner umfassend:

einen Datenerzeugungsabschnitt (23); und

einen Richtungsschätzungsabschnitt (26),

wobei der Datenerzeugungsabschnitt (23) in Reaktion auf eine Eingabeoperation erste Bereichsdaten, die den ersten Bereich angeben, und repräsentative Liniendaten erzeugt, die repräsentative Linien des Streifenmusterrauschens angeben, und

der Richtungsschätzungsabschnitt (26) basierend auf den ersten Bereichsdaten und den repräsentativen Liniendaten eine Berechnung bezüglich einer Richtung des Streifenmusterrauschens an einer Position jedes Pixels innerhalb des ersten Bereichs ausführt und basierend auf dem Berechnungsergebnis die Richtungsverteilungsdaten erzeugt.

3. Bildverarbeitungsvorrichtung (10) nach Anspruch 1 oder 2, wobei der erste Bildverbesserungsabschnitt (28) basierend auf einer zweiten Richtung als einer Richtung des Streifenmusterrauschens an einer zweiten Position als einer Position des zweiten Pixels innerhalb des ersten Bereichs einen zweiten Referenzbereich als einen lokalen Bereich, der ein zweites Pixel enthält, so berechnet, dass der zweite Referenzbereich im ersten Bereich enthalten ist,

das erste Pixel im zweiten Referenzbereich enthalten ist, und

der erste Bildverbesserungsabschnitt (28) die Nachbearbeitungsdichte aus einer Vorbearbeitungsdichte als eine Dichte vor dem Bildprozeß im ersten Pixel durch eine lineare Transformation unter Verwendung eines lokalen Maximums als der Kleinsten einer maximalen Dichte im ersten Dichtehistogramm im zweiten Referenzbereich und eines lokalen Minimums als der Größen einer minimalen Dichte im ersten Dichtehistogramm und einer minimalen Dichte im zweiten Dichtehistogramm so berechnet, dass die Nachbearbeitungsdichte in einem vorgegebenen Dichteintervall enthalten ist.

4. Bildverarbeitungsvorrichtung (10) nach Anspruch 3, wobei das lokale Maximum Pmax ist, das lokale Minimum Pmin ist, ein Minimum des Dichteintervalls Tmin ist, ein Maximum des Dichteintervalls Tmax ist, die Vorbearbeitungsdichte Gb ist und die Nachbearbeitungsdichte Ga ist, und

der erste Bildverbesserungsabschnitt (28) die Nachbearbeitungsdichte basierend auf der folgenden Gleichung berechnet:  $Ga = (Gb-Pmin) \, (Tmax-Tmin) \, / \, (Pmax-Pmin) + Tmin.$

5. Bildverarbeitungsvorrichtung (10) nach einem der vorhergehenden Ansprüche, wobei der erste Bildverbesserungsabschnitt (28) ein drittes Pixel, das

im ersten Bereich enthalten ist, basierend auf der ersten Position und der ersten Richtung detektiert, ein viertes Pixel, das im ersten Bereich enthalten ist, basierend auf einer dritten Position als einer Position des dritten Pixels und einer dritten Richtung als einer Richtung des Streifenmusterrauschens im dritten Pixel detektiert und den ersten Referenzbereich so bestimmt, dass das vierte Pixel im ersten Referenzbereich enthalten ist.

6. Bildverarbeitungsvorrichtung (10) nach Anspruch 1 oder 2, ferner umfassend:

einen zweiten Bildverbesserungsabschnitt (27), der dazu konfiguriert ist, einen zweiten Bildverbesserungsprozef5 in einem zweiten Bereich als einem Bereich ausführt, der ein anderer ist als der erste Bereich des Streifenmusterbildes,

wobei der zweite Bildverarbeitungsabschnitt (27) einen zweiten Referenzbereich als einen lokalen Bereich, der das zweite Pixel enthält, innerhalb des zweiten Bereichs so berechnet, dass der zweite Referenzbereich im zweiten Bereich enthalten ist, basierend auf einem zweiten Dichtehistogramm im zweiten Referenzbereich eine Dichte nach dem zweiten Bildverbesserungsprozeß im zweiten Pixel berechnet, und

der erste Referenzbereich und der zweite Referenzbereich basierend auf einem lokalen Histogrammausgleichsverfahren und einem Kontraststreckungsverfahren im ersten Bildverbesserungsprozeß bzw, dem zweiten Bildverbesserungsprozeß so bestimmt werden, dass die maximalen Intervalle gleich sind.

7. Bildverarbeitungsverfahren, umfassend:

Ausführen eines ersten Bildverbesserungsprozesses (34) an einem ersten Bereich eines Streifenmusterbildes als ein Graustufenbild,

wobei im ersten Bereich ein Streifenmusterrauschen existiert,

wobei das Ausführen (34) umfaßt:

Bestimmen eines ersten Referenzbereichs als einen lokalen Bereich, der ein erstes Pixel enthält, basierend auf einer ersten Richtung als einer Richtung des Streifenmusterrauschens an einer ersten Position als einer Position des ersten Pixels im ersten Bereich so, dass der erste Referenzbereich im ersten Bereich enthalten ist; und

Berechnen einer Nachbearbeitungsdichte als eine Dichte nach dem ersten Bildverbesserungsprozeß am ersten Pixel basierend auf einem ersten Dichtehistogramm im ersten Referenzbereich;

Bestimmen, dass der erste Referenzbereich eine Form aufweist, die entlang einer gekrümmten Linie gekrümmt ist, die im Streifenmusterrauschen enthalten ist.

8. Bildverarbeitungsverfahren nach Anspruch 7, ferner umfassend:

Erzeugen von Richtungsverleilungsdaten, die eine Richtungsverteilung des Streifenmusterrauschens angeben, wobei sich die Richtungsverteilungsdaten auf die erste Position und die erste Richtung beziehen, wobei das Erzeugen umfaßt:

Erzeugen erster Bereichsdaten, die den ersten Bereich angeben, und repräsentativer Liniendaten, die repräsentative Linien des Streifenmusterrauschens angeben, basierend auf einer Eingabeoperation; und
Berechnen der Richtung des Streifenmusterrauschens an einer Position jedes Pixels im ersten Bereich basierend auf den ersten Bereichsdaten und den repräsentativen Liniendaten.

9. Bildverarbeitungsverfahren nach Anspruch 7 oder 8, wobei das Ausführen eines ersten Bildverbesserungsprozesses (54) umfaßt:

Bestimmen eines zweiten Referenzbereichs als einen lokalen Bereich, der ein zweites Pixel enthält, basierend auf einer zweiten Richtung als der Richtung des Streifenmusterrauschens an einer zweiten Position als einer Position des zweiten Pixels im ersten Bereich so, dass der zweite Referenzbereich im ersten Bereich enthalten ist, und
das erste Pixel im zweiten Referenzbereich enthalten ist,
wobei das Berechnen der Nachbearbeitungsdichte umfaßt:

Berechnen der Nachbearbeitungsdichte aus einer Vorbearbeitungsdichte als eine Dichte vor dem Bildprozeß im ersten Pixel, so dass die Nachbearbeitungsdichte in einem vorgegebenen Dichteintervall enthalten ist, durch eine lineare Transformation unter Verwendung eines lokalen Maximums als der Kleinsten einer maximalen Dichte in einem ersten Dichtehistogramm und einer maximalen Dichte in einem zweiten Dichtehistogramm im zweiten Referenzbereich, sowie eines lokalen Minimums der Größten einer minimalen Dichte im ersten Dichtehistogramm und einer minimalen Dichte im zweiten Dichtehistogramm.

10. Bildverarbeitungsverfahren nach Anspruch 9, wobei das lokale Maximum Pmax ist, das lokale Minimum Pmin ist, ein Minimum des Dichteintervalls Tmin ist, ein Maximum des Dichteintervalls Tmax ist, die Vorbearbeitungsdichte Gb ist und die Nachbearbeitungsdichte Ga ist, und
das Berechnen der Nachbearbeitungsdichte umfaßt:

Berechnen der Nachbearbeitungsdichte basierend auf der folgenden Gleichung:

$$Ga = (Gb-Pmin)(Tmax-Tmin) / (Pmax-Pmin) + Tmin.$$

11. Bildverarbeitungsverfahren nach einem der vorhergehenden Ansprüche, wobei das Bestimmen des ersten Referenzbereichs umfaßt:

Detektieren eines dritten Pixels, das im ersten Bereich enthalten ist, basierend auf der ersten Position und der ersten Richtung;
Detektieren eines vierten Pixels, das im ersten Bereich enthalten ist, basierend auf einer dritten Position als einer Position des dritten Pixels und einer dritten Richtung als einer Richtung des Streifenmusterrauschens im dritten Pixel; und
Bestimmen des ersten Referenzbereichs so, dass das vierte Pixel im ersten Referenzbereich enthalten ist.

12. Bildverarbeitungsverfahren nach Anspruch 7 oder 8, ferner umfassend:

Ausführen eines zweiten Bildverbesserungsprozesses (55) bezüglich des zweiten Bereichs als einem Bereich, der ein anderer ist als der erste Bereich des Streifenmusterbildes,

wobei das Ausführen des zweiten Bildverbesserungsprozesses (55) umfaßt:

Bestimmen eines zweiten Referenzbereichs als einen lokalen Bereich, der ein zweites Pixel enthält, im zweiten Bereich so, dass der zweite Referenzbereich im zweiten Bereich enthalten ist; und
Berechnen einer Dichte nach dem zweiten Bildverbesserungsprozeß am zweiten Pixel basierend auf einem zweiten Dichtehistogramm im zweiten Referenzbereich, und
der erste Referenzbereich und der zweite Referenzbereich basierend auf einem lokalen Histogrammausgleichsverfahren oder einem lokalen Kontraststreckungsverfahren im ersten Bildverbesserungsprozeß und im zweiten Bildverbesserungsprozeß so bestimmt werden, dass sie im maximalen Bereich koinzident miteinander sind.

**13.** Computerlesbares Aufzeichnungsmedium, in dem ein computeriesbares Programm aufgezeichnet ist, um ein Bildverarbeitungsverfahren nach einem der Ansprüche 7 bis 12 auszuführen.

**Revendications**

**1.** Appareil de traitement d'image (10) comprenant :

une section de stockage de données (22) configurée pour stocker des données d'image d'une image à motif strié comme une image à niveaux de gris et des données de distribution de direction indiquant une distribution de direction d'un bruit de motif strié dans une première zone de l'image à motif strié ; et
une première section d'amélioration d'image (28) configurée pour exécuter un premier processus d'amélioration d'image dans la première zone,
où les données de distribution de direction lient une première position comme une position d'un premier pixel dans la première zone et une première direction comme une direction du bruit de motif strié dans la première position,
ladite première section d'amélioration d'image (28) détermine une première zone de référence comme une zone locale qui contient le premier pixel sur la base de la première direction de sorte que la première zone de référence soit contenue dans la première zone, et calcule une densité post-processus comme une densité après le premier processus d'amélioration d'image dans le premier pixel sur la base d'un premier histogramme de densité dans la première zone de référence,
où ladite première section d'amélioration d'image (28) détermine la première zone de référence pour avoir une forme incurvée le long d'une ligne incurvée contenue dans le bruit de motif strié.

**2.** Appareil de traitement d'image (10) selon la revendication 1, comprenant en outre :

une section de génération de données (23) ; et
une section d'estimation de direction (26),
où ladite section de génération de données (23) génère des données de première zone indiquant la première zone et des données de ligne représentative indiquant des lignes représentatives du bruit de motif strié en réponse à une opération d'entrée, et
ladite section d'estimation de direction (26) exécute un calcul sur une direction du bruit de motif strié dans une position de chaque pixel à l'intérieur de la première zone sur la base des données de première zone et des données de ligne représentative et génère les données de distribution de direction sur la base du résultat de calcul.

**3.** Appareil de traitement d'image (10) selon la revendication 1 ou 2, dans lequel ladite première section d'amélioration d'image (28) détermine une seconde zone de référence comme une zone locale contenant un second pixel sur la base d'une seconde direction comme une direction du bruit de motif strié dans une seconde position comme une position du second pixel à l'intérieur de la première zone de sorte que la seconde zone de référence soit contenue dans la première zone,
le premier pixel est contenu dans la seconde zone de référence, et
ladite première section d'amélioration d'image (28) calcule la densité post-processus à partir d'une densité pré-processus comme une densité avant le processus d'image dans le premier pixel de sorte que la densité post-processus soit contenue dans une plage de densité prédéterminée, par l'intermédiaire d'une transformation linéaire en utilisant un maximum local comme la plus petite d'une densité maximum dans le premier histogramme de densité et d'une densité maximum dans le second histogramme de densité dans la seconde zone de référence et un minimum local comme la plus grande d'une densité minimum dans le premier histogramme de densité et d'une densité minimum dans le second histogramme de densité.

4. Appareil de traitement d'image (10) selon la revendication 3, dans lequel le maximum local est Pmax, le minimum local est Pmin, un minimum de la plage de densité est Tmin, un maximum de la plage de densité est Tmax, la densité pré-processus est Gb, et la densité post-processus est Ga, et
ladite première section d'amélioration d'image (28) calcule la densité post-processus sur la base de l'équation

suivante : $Ga = (Gb-Pmin)(Tmax-Tmin)/(Pmax-Pmin)+Tmin$

5. Appareil de traitement d'image (10) selon l'une quelconque des revendications précédentes, dans lequel ladite première section d'amélioration d'image (28) détecte un troisième pixel contenu dans la première zone sur la base de la première position et de la première direction, détecte un quatrième pixel contenu dans la première zone sur la base d'une troisième position comme une position du troisième pixel et d'une troisième direction comme une direction du bruit de motif strié dans le troisième pixel, et détermine la première zone de référence de sorte que le quatrième pixel soit contenu dans la première zone de référence.

6. Appareil de traitement d'image (10) selon la revendication 1 ou 2, comprenant en outre :

une seconde section d'amélioration d'image (27) configurée pour exécuter un second processus d'amélioration d'image dans une seconde zone comme une zone autre que la première zone de l'image à motif strié,
où ladite seconde section d'amélioration d'image (27) détermine une seconde zone de référence comme une zone locale qui contient le second pixel à l'intérieur de la seconde zone de sorte que la seconde zone de référence soit contenue dans la seconde zone, calcule une densité après le second processus d'amélioration d'image dans le second pixel sur la base d'un second histogramme de densité dans la seconde zone de référence, et
la première zone de référence et la seconde zone de référence sont déterminées de sorte que les plages de maximums soient les mêmes, sur la base de l'un d'un procédé d'égalisation d' histogramme local et d' un procédé d'étirement de contraste dans le premier processus d'amélioration d'image et le second processus d'amélioration d'image, respectivement.

7. Procédé de traitement d'image comprenant :

l'exécution d' un premier processus d'amélioration d'image (S4) sur une première zone d'une image à motif strié comme une image à niveaux de gris,
où un bruit de motif strié existe dans la première zone,
ladite exécution (S4) comprend :

la détermination d'une première zone de référence comme une zone locale contenant un premier pixel sur la base d'une première direction comme une direction du bruit de motif strié dans une première position comme une position du premier pixel dans la première zone de sorte que la première zone de référence soit contenue dans la première zone ; et
le calcul d'une densité post-processus comme une densité après le premier processus d'amélioration d'image sur le premier pixel sur la base d'un premier histogramme de densité dans la première zone de référence,
où ladite détermination de la première zone de référence comprend :

la détermination de la première zone de référence pour avoir une forme incurvée le long d'une ligne incurvée contenue dans le bruit de motif strié.

8. Procédé de traitement d'image selon la revendication 7, comprenant en outre :

la génération de données de distribution de direction indiquant une distribution de direction du bruit de motif strié,
où les données de distribution de direction lient la première position et la première direction,
ladite génération comprend :

la génération de données de première zone indiquant la première zone et de données de ligne représentative indiquant des lignes représentatives du bruit de motif strié sur la base d'une opération d'entrée ; et

le calcul de la direction du bruit de motif strié sur une position de chaque pixel dans la première zone sur la base des données de première zone et des données de ligne représentative.

9. Procédé de traitement d'image selon la revendication 7 ou 8, dans lequel ladite exécution d'un premier processus d'amélioration d'image (S4) comprend :

la détermination d'une seconde zone de référence comme une zone locale contenant un second pixel sur la base d'une seconde direction comme la direction du bruit de motif strié sur une seconde position comme une position du second pixel dans la première zone de sorte que la seconde zone de référence soit contenue dans la première zone, et
le premier pixel est contenu dans la seconde zone de référence, et
ledit calcul de la densité post-processus comprend :

le calcul de la densité post-processus à partir d'une densité pré-processus comme une densité avant le processus d'image dans le premier pixel, de sorte que la densité post-processus soit contenue dans une plage de densité prédéterminée, par l'intermédiaire d'une transformation linéaire utilisant un maximum local comme la plus petite d'une densité maximum dans un premier histogramme de densité et d'une densité maximum dans un second histogramme de densité dans la seconde zone de référence, et un minimum local comme la plus grande d'une densité minimum dans le premier histogramme de densité et d'une densité minimum dans le second histogramme de densité.

10. Procédé de traitement d'image selon la revendication 9, dans lequel le maximum local est Pmax, le minimum local est Pmin, un minimum de la plage de densité est Tmin, un maximum de la plage de densité est Tmax, la densité pré-processus est Gb, et la densité post-processus est Ga, et
ledit calcul de la densité post-processus comprend :

le calcul de la densité post-processus sur la base de l'équation suivante :

$$Ga = (Gb-Pmin)(Tmax-Tmin)/(Pmax-Pmin)+Tmin$$

11. Procédé de traitement d'image selon l'une quelconque des revendications précédentes, dans lequel ladite détermination de la première zone de référence comprend :

la détection d'un troisième pixel contenu dans la première zone sur la base de la première position et de la première direction ;
la détection d'un quatrième pixel contenu dans la première zone sur la base d'une troisième position comme une position du troisième pixel et d'une troisième direction comme une direction du bruit de motif strié dans le troisième pixel ; et
la détermination de la première zone de référence de sorte que le quatrième pixel soit contenu dans la première zone de référence.

12. Procédé de traitement d'image selon la revendication 7 ou 8, comprenant en outre :

l'exécution d'un second processus d'amélioration d'image (S5) sur une seconde zone comme une zone autre que la première zone de l'image à motif strié,
où ladite exécution du second processus d'amélioration d'image (S5) comprend :

la détermination d'une seconde zone de référence comme une zone locale qui contient un second pixel dans la seconde zone de sorte que la seconde zone de référence soit contenue dans la seconde zone ; et
le calcul d'une densité après le second processus d'amélioration d'image sur le second pixel sur la base d'un second histogramme de densité dans la seconde zone de référence, et
la première zone de référence et la seconde zone de référence sont déterminées pour être identiques l'une à l'autre en plages de maximums, sur la base de l'un d'un procédé d'égalisation d'histogramme local et d'un procédé d'étirement de contraste local dans le premier processus d'amélioration d'image et le second processus d'amélioration d'image.

13. Support d'enregistrement lisible par ordinateur dans lequel un programme lisible par ordinateur est enregistré afin de réaliser un procédé de traitement d'image selon l'une quelconque des revendications 7 à 12.

# Fig. 1

10:IMAGE PROCESSING APPARATUS

1:DATA PROCESSING UNIT

CPU

2

STORAGE UNIT

3

4

IMAGE INPUT UNIT — 5

DISPLAY UNIT — 6

PRINTER — 7

DATA INPUT UNIT — 8

14

MATCHING UNIT

19

# Fig. 2

# Fig. 3

```
        ┌─────────────┐
        │    START    │
        └─────────────┘
               │
S1 ┌──────────────────────────┐
   │  INPUT FINGER PRINT IMAGE │
   └──────────────────────────┘
               │
S2 ┌──────────────────────────┐
   │ SET REPRESENTATIVE LINE AND│
   │   NOISE AREA BY OPERATOR  │
   └──────────────────────────┘
               │
S3 ┌──────────────────────────┐
   │ ESTIMATE DIRECTION BASED ON│
   │    REPRESENTATIVE LINE    │
   └──────────────────────────┘
               │
S4 ┌──────────────────────────┐
   │    ENHANCE NORMAL IMAGE   │
   │      OUT OF NOISE AREA    │
   └──────────────────────────┘
               │
S5 ┌──────────────────────────┐
   │  ENHANCE DIRECTION-USING  │
   │    IMAGE IN NOISE AREA    │
   └──────────────────────────┘
               │
S6 ┌──────────────────────────┐
   │      IMAGE SYNTHESIS      │
   └──────────────────────────┘
               │
S7        ◇ PROCESSING          IMPROPER
          RESULT: PROPER ? ─────────►
               │ PROPER
S8 ┌──────────────────────────┐
   │  OUTPUT FINGER PRINT IMAGE │
   └──────────────────────────┘
               │
        ┌─────────────┐
        │     END     │
        └─────────────┘
```

# Ｆｉｇ．４Ａ

# Ｆｉｇ．４Ｂ

# Fig. 5

# Fig. 6

# F i g . 7

# Fig. 8A

# Fig. 8B

Fig. 9

Fig. 10

# Fig. 11

# Fig. 12

Fig. 13A

Fig. 13B

Fig. 14A

Fig. 14B

Fig. 14C

Fig. 15A

Fig. 15B

Fig. 15C

# Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEISEI7121723A A
- JP P200299912 A
- JP P2007226746 A
- JP P200852602 A
- US 20080031531 A1
- JP HEISEI7121723 A

**Non-patent literature cited in the description**

- **M. Cannon ; A. Lehar ; F. Preston.** Background Pattern Removal by Power Spectral Filtering. *Applied Optics,* 15 March 1983
- **Lin Hong ; Yifei Wang ; Anil Jain.** fingerprint Image Enhancement: Algorithm and Performance Evaluation. *IEEE Transactions on Pattern Analysis and Machine Intelligence,* 1998